Europäisches Patentamt

European Patent Office

Office européen des brevets

(19)

(11) Publication number: **0 160 923**
A1

(12) # EUROPEAN PATENT APPLICATION

(21) Application number: 85105282.9

(22) Date of filing: 30.04.85

(51) Int. Cl.⁴: **F 16 H 19/00**

(30) Priority: 30.04.84 US 605183

(43) Date of publication of application:
13.11.85 Bulletin 85/46

(84) Designated Contracting States:
BE CH DE FR GB IT LI NL SE

(71) Applicant: Kosmowski, Wojciech
26392 Calle Roberto
San Juan Capistrano, Ca. 92675(US)

(72) Inventor: Kosmowski, Wojciech
26392 Calle Roberto
San Juan Capistrano, Ca. 92675(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Linear actuator.

(57) A linear actuator mechanism is disclosed wherein rotary motion from a motor is converted to linear motion of a carriage by the engagement of a drive wheel coupled to said motor rotating to engage a timing belt. The timing belt and the drive wheel have interengaging teeth.

A support frame includes a rack imprinted with teeth matching those of the belt. Two idler rollers, affixed to the carriage, maintain, with constant tension, the belt in contact with the rack except in that portion which passes around the drive wheel. Rotation of the drive wheel thus causes linear translation of the carriage.

The timing belt either is rigidly affixed at each end to the support frame or loops endlessly around the the idler rollers and the driving wheel.

FIG.2

FIG.4

EP 0 160 923 A1

0160923

# LINEAR ACTUATOR

## BACKGROUND OF THE INVENTION

### 1.   Field of the Invention

The present invention relates generally to a mechanism for converting rotary motion to linear motion or to a second rotary motion and, more particularly, to an improved machine element and mechanism providing a constant stiffness and a significant reduction in backlash.

### 2.   Description of the Prior Art

Several differing approaches have been advanced to provide a system whereby one element of a mechanism, commonly referred to as a carriage, can be translated with respect to a frame of the mechanism. One of the earliest of such systems employs a cable or chain, passed around pulleys at either end of the frame and attached to both sides of the carriage. By driving one of the pulleys, the chain is drawn in one direction, causing the carriage to translate. Several difficulties have been experienced in such a system in that the cable or chain often tends to stretch or to slip on the drive. Moreover, the inertial effects of a heavy carriage place great strain on the cable or chain, which can result in backlash and/or positioning uncertainty, particularly if the carriage is to traverse a significant span.

A second useful approach has employed a lead screw passing through a threaded hole in the carriage such that rotation of the lead screw causes linear translation of the carriage. Accurate positioning of the carriage can be accomplished if the threads of the lead screw are sufficiently fine, if they match the threads in the carriage with a sufficiently small tolerance, and if the rotation of the lead screw can be sufficiently controlled. However, as the length of the lead screw is increased, to provide for a greater carriage traverse span, rotational stresses within the lead screw can become significant. Such stress may introduce torsion inaccuracy into the system and ultimately may become large enough to shear the lead screw.

A further technology, related to that employed in the present invention, has been the subject of extensive research and numerous patents. These prior efforts fall generally within the various adaptations of a roller-band principle to industrial uses. One such proposal is that presented in U. S. Patent No. 3,850,043, wherein a flexible band is rigidly affixed at each end to an inner surface of one rail of a guideway. A slack portion in the flexible band, intermediate between the two points of attachment, is passed around a pair of rollers forming an S-shaped portion and around a second pair of rollers forming an inverse S-shaped pattern. The spacing between the two pairs of rollers is such that no remaining slack exists in the flexible band. That portion of the flexible band between the two pairs of rollers engages, by the interengagement of male teeth formed on the flexible band and female teeth formed on the opposed parallel surface of the other rail or guideway, said other rail thus maintaining that portion of the flexible band in a constant positional relationship with the other rail. By driving one of the rollers while maintaining the relative positional arrangement of the several rollers, a carriage supported by said rollers may be translated along the guideway.

However, the male interengaging teeth of the flexible band are unidirectional and only engage the female teeth on the guideway rail opposite that to which the ends of the flexible band are connected. The flexible band thus may slidably translate in a longitudinal direction parallel to the guideway rail to which is attached, within the limits of extensability

of the flexible band material. This situation may result in the introduction of backlash in the positioning of the grouping of roller pairs relative to the one rail of the guideway.

The path followed by the flexible band in traversing the two pair of rollers requires that the roller pairs have a significant separation to allow engagement of a plurality of the teeth in the opposite guideway rail. It would appear that the useful longitudinal translation of the carriage mounted between said pairs of rollers is effectively reduced by the distance separating the centers of rotation of the rollers most proximately mounted to the guideway rail to which the flexible band is attached. Thus, depending upon the application to which the roller-band apparatus is applied, the guide rails may be required to be significantly longer than the desired carriage traversing distance.

0160923

## SUMMARY OF THE INVENTION

It is a general object of the invention to maximize the efficiency at which a mechanical element can be driven over long lengths in order to convert rotary motion to rectilinear motion.

More specifically, it is an object of the invention to provide a linear actuator having a constant driving stiffness in the transmission of a driving force to a drive wheel.

Another object of the invention is to provide a linear actuator having an improved capability for the absorption of shock induced by rapid translation and stopping of a translatable carriage.

A further object of the invention is to provide a linear actuator having significantly reduced lubrication and maintenance requirements.

Yet another object of the invention is to provide a linear actuator which can be operated in any desired length without reduction in accuracy, ease of operation or uniformity of drive stiffness.

In an alternate embodiment, it is an object of the invention to provide an actuator with a constant drive stiffness for producing a rotary motion from a driven rotary motion.

To attain these and other objects which may become clear through the detailed description of the invention hereinbelow, there is provided a linear actuator comprising a rack having female teeth along one surface thereof, a timing belt affixed to each end of the rack and having male teeth thereon so disposed as to engage the female teeth on the rack, and a drive wheel, powered by a servo motor through a gear arrangement, entrapped in a slack loop of the timing belt between the rack and the timing belt and intermediate between the points of attachment of the timing belt to the rack. The drive wheel contains female teeth to engage the male teeth of the timing belt. Sufficient additional belt length is incorporated so that the drive wheel is not in contact with the rack, while enabling engagement of the belt with substantially 180° of the circumference of the drive wheel.  Two idler rollers are provided external to the timing belt and in close proximity to the drive wheel and to the rack to maintain the timing belt in contact with the rack except in the region in which the timing belt passes around the drive wheel thereby removing the entire length of the timing belt, except that between the two idler rollers and passing around the drive wheel, from consideration in the operation of the actuator. Rotation of the drive wheel at a constant angular velocity causes translation of the drive wheel and idler rollers, together with a carriage mounted thereon, at a constant linear motion along the length of the rack.

In another aspect of the invention, the rack may be replaced by a wheel having female teeth about its periphery, and in which the timing belt is endless, passing fully around the wheel, to which it is held by the idler rollers, except for a loop passing around the drive wheel.  Inclusion of an encoder, which may be a rotary encoder on the drive wheel or a linear encoder associated with the relative carriage position along the rack, can provide information as to the position of the carriage so as to enable rapid, stable, smooth and accurate directional and positional control of the carriage.

While the following detailed description of the invention is addressed to the application of the linear actuator as a robotics drive system, it will be clear that the herein invention may be applied with appropriate obvious modification to other systems requiring linear translation from a rotary motion.  One such further application is envisioned to be the controlled translation of a carriage containing a hammer bank across a long printer frame. Therefore, these and other objects of the invention which may become obvious through the detailed description of the invention are not to be construed as limiting in the scope of the present invention.

## BRIEF DESCRIPTION OF THE DRAWINGS

In the drawing:

Fig. 1 is a perspective view of a linear actuator in accordance with the present invention;

Fig. 2 is a cross-sectional view taken along the projection 2 of Fig. 1;

Fig. 3 is a cross-sectional top view of a gear housing in accordance with a preferred embodiment taken along projection 3 of Fig. 2;

Fig. 4 is a partial cross-sectional top view of the lower portion of the linear actuator taken along projection 4 of Fig. 2;

Fig. 5 is a cross-sectional end view of the linear actuator taken along projection 5 of Fig. 2;

Fig. 6 is a perspective view of a timing belt, rack, and drive system in accordance with the present invention;

Fig. 7 shows an alternate embodiment for the suspension of gears within a gear housing of Fig. 3;

Fig. 8 presents a further alternate embodiment of a drive mechanism for a rotary actuator in accordance with the present invention; and

Fig. 9 shows an alternate drive system in accordance with the present invention having a closed loop timing belt.

DETAILED DESCRIPTION OF THE INVENTION

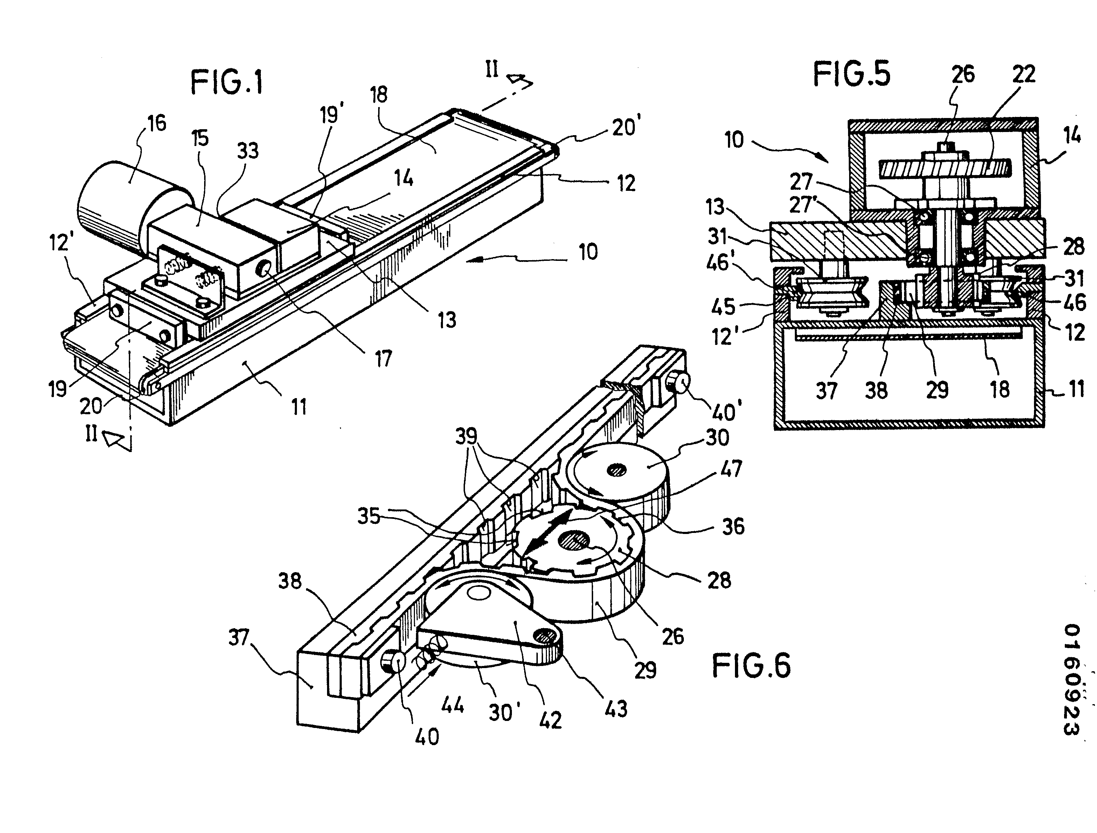

Referring first to Fig. 1, a preferred embodiment of a linear actuator assembly in accordance with the present invention is shown generally at 10. The linear actuator assembly 10 is comprised of a frame 11 on which are affixed a pair of rails 12, 12'. A robot carriage 13 is mounted between the rails 12, 12' in a manner allowing translation of the carriage 13 along the length of the frame 11. A gear box 14 is partially rigidly affixed to the upper surface of the carriage 13. The gear box 14 includes a movable portion 15. A motor 16 is mounted to the gear box 14 in a manner so that it is coupled to a shaft 17 extending through the movable portion 15 of the gear box 14. A recirculating dust cover 18 is affixed to the ends of the carriage 13 by brackets 19, 19' and passes around pulleys 20, 20' through the frame 11.

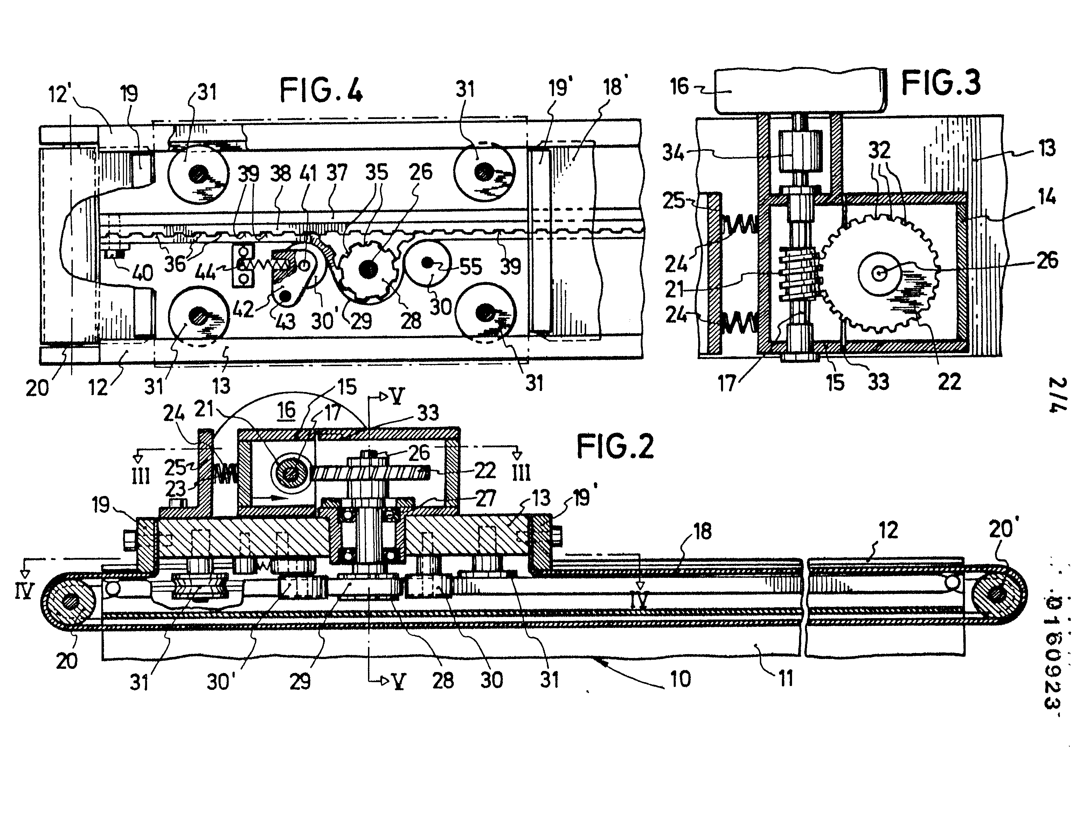

Referring next to Fig. 2, the shaft 17, which is coupled to the motor 16, carries a worm gear 21 which engages a driven gear 22 within the gear box 14. The movable portion 15 of the gear box 14 is forced in the direction of the arrow 23 by the action of springs 24, supported by a stop 25, in order to maintain a constant pressure of contact between the worm gear 21 and the driven gear 22. Rotation of the shaft 17 by the motor 16 causes the worm gear 21 to rotate, which in turn causes the driven gear 22 to rotate about an axis carrying a rotatable second shaft 26, which depends from the gear box 14 into the carriage 13 through a pair of bearings 27, 27'. A drive wheel 28 is affixed to, and rotates with, the other end of the shaft 26. Rotation of the drive wheel 28 in contact with a timing belt 29, as will be more fully described below, causes the carriage 13 to traverse from left to right or from right to left along the rails 12, 12' affixed to the frame 11. The belt 29 is guided by a pair of idler rollers 30, 30'. Carriage guide rollers 31 are included to carry the carriage 13 between the rails 12 along the extent of the frame 11.

The recirculating dust cover 18 is shown to be attached to the left end of the carriage 13 by the bracket 19. The dust cover 18 passes between the rails 12 to the left and around the pulley 20 through an angle of 180 degrees, from which it passes through a channel formed in the frame 11 to the right end of the frame 11. At that point the dust cover 18 passes around the pulley 20' and reenters the channel between the rails 12 until it reaches the right end of the carriage 13 to which it is affixed by the bracket 19'. As the carriage 13 is traversed from left to right, the recirculating dust cover 18 moves in a clockwise rotation around the pulleys 20 and 20'. The dust cover 18 serves to enclose the linear actuator mechanism so that lubrication is not necessary.

Referring next to Fig. 3, it is seen that the worm gear 21 engages teeth 32 formed about the periphery of the gear 22. A gap 33, enclosed by a conventional, flexible dust shield (not illustrated), is provided between the movable portion 15 of the gear box 14 and that portion of the gear box 14 which is attached to the carriage 13. This enables the action of the springs 24, located proximately to each side of the movable portion 15 of the gear box 14, to slide or pivot the movable portion 15 in order to maintain a constant contact pressure between the worm gear 21 and the driven gear 22. The shaft 17 is coupled to a drive shaft of the motor 16 by a flexible coupling element 34, which further permits the maintenance of the aforementioned constant contact pressure. The motor 16 may, additionally, be mounted so as to move with the movable portion 15 of the gear box 14 to further enhance this capability. Rotation of the drive shaft of the motor 16, causing rotation, through the coupling 34, of the shaft 17 in a manner such that the top of

0160923

the worm gear 21 will be caused to move from right to left (as seen in Fig. 3), will in turn cause the driven gear 22 to rotate in a clockwise direction.

Referring next to Fig. 4, the drive wheel 28, rotating with the shaft 26, has a plurality of female teeth 35 formed around its periphery to engage with a differing plurality of male teeth 36 formed in the contacting surface of the timing belt 29. A support 37 is rigidly attached to the frame 11. A rack 38 is rigidly attached along the length of the support 37 and carries a third plurality of female teeth 39, each matching the male teeth 36 impressed on the timing belt 29. The timing belt 29 is attached to the rack 38 and the support 37 at the left end by a bolt or a similar standard fastening device. The right end of the timing belt 29 is similarly attached (not illustrated) to the right end of the rack 38 and the support 37. The timing belt 29 has a length which is appropriately longer than the distance between the points of attachment of the timing belt 29 to the rack 38. The male teeth 36 of the timing belt 29 are engaged with the female teeth 39 of the rack 38 throughout their mutual length except in the region of the drive wheel 28 whereat the belt 29 forms a loop to pass around the outer periphery of the drive wheel 28. An idler roller 30, having a fixed relationship relative to the drive wheel 28, maintains that portion of the belt 29 extending rightwardly of the idler roller 30 firmly in contact with the rack 38 so that the respective male teeth 36 of the belt 29 are in engagement with the female teeth 39 of the rack 38, particularly in the immediate vicinity of the idler roller 30. A second idler roller 30' functions in a similar manner to maintain that portion of the belt 29 extending leftwardly of the drive wheel 28 in contact with the rack 38. The idler roller 30 rotates about a shaft 55 attached to the undersurface of the carriage 13. The idler roller 30' rotates about a shaft 41 which is carried by a support element 42 pivotally attached to the undersurface of the carriage 13 by a shaft 43. A spring 44 maintains the idler roller 30' in contact with the timing belt 29 in a manner that removes any slack from the timing belt 29 and maintains the timing belt 29 in contact with the rack 38 and the drive wheel 28.

Four carriage guide rollers 31 are disposed proximate to the four corners of the carriage 13, each rotatably affixed to the carriage 13, so that two of the rollers 31 are in contact with the rail 12 while the other two rollers 31 maintain contact with the rail 12' thereby providing a smooth, rolling translation capability to the carriage 13 in a direction from left to right and the reverse. Transverse motion in a direction perpendicular to the extent of rails 12 and 12' and skewing of the carriage 13 are inhibited by the placement of the rollers 31.

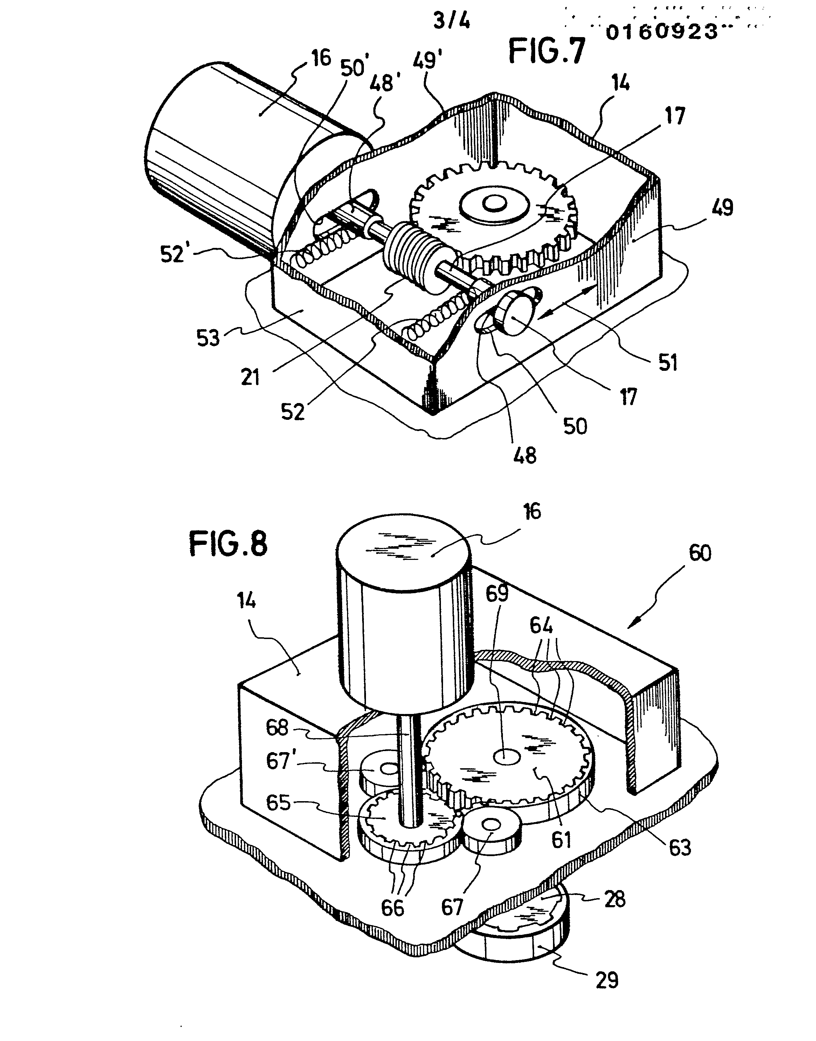

Referring next to Fig. 5, it should be noted that each of the carriage guide rollers 31 has a V-shaped notch 45 formed circumferentially about its periphery. The notches 45 respectively engage V-shaped tracks 46, 46' affixed to the inner surfaces of the rails 12 and 12'. The interrelationship between the notches 45 and the tracks 46, 46' operably provides both a vertical load carrying capability and precludes transverse horizontal motion. Additionally, the recirculating dust cover 18 can be seen to pass through a channel formed within the frame 11.

Referring next to Fig. 6, wherein the relationship between the support 37 bearing the rack 38, the timing belt 29, the drive wheel 28, and the idler rollers 30 and 30' are shown in perspective, the operation of the linear actuator can be clearly illustrated. As previously described, the drive wheel 28, the idler roller 30 and the second idler roller 30', carried by its support 42, are all mounted to the carriage 13 of Fig. 1. On the other hand, the support 37, having affixed thereto the rack 38 to which the timing belt 29 is attached at both ends by the bolts 40, 40', maintains a fixed relationship with respect to the frame 11 of Fig. 1. As the drive wheel 28 is rotated by the shaft 26, the engagement of the female teeth 35 of the drive wheel 28 with the male teeth 36 on the timing belt 29 causes the carriage portion of the assembly to traverse back and forth in the direction indicated by the arrow 47. The only portion of the timing belt 29 of importance during this translation of the carriage 13 is that portion wherein the timing belt 29 is diverted from contact with the rack 38 to pass around the idler roller 30, the drive wheel 28, and the second idler roller 30', where contact is again made with the rack 38. Since these elements have a substantially fixed relationship with one another, the length of the timing belt 29 not engaged with the rack 38 will remain substantially constant throughout the traversing of the carriage along the full extent of the frame 11 (Fig. 1) in either direction indicated by arrow 47. A rotary encoder may be attached to the shaft 26, in a conventional manner, to provide feedback information relatable to the position and/or the velocity of the carriage. In the alternative, a linear encoder may be coupled between the carriage 13 and the frame 11 to provide such feedback information.

The linear actuator described hereinabove will have a substantially constant drive stiffness regardless of the length of the rack 38. This construction enables a very long timing belt, at least as long as 20 feet, to be used for accurately positioning a robot carriage in linear motion.

An alternate embodiment is illustrated in Fig. 7 to present a second preferred embodiment of the coupling and drive system between the motor 16 and the driven gear 22. In this alternate embodiment, the shaft 17 of the worm gear 21 passes through bushings 48 and 48' inserted through the sidewalls 49, 49' of the gear box 14. The bushings pass through holes 50, 50' which have an elongated shape in a horizontal direction, enabling the bushings 48, 48' carrying the shaft 17 to move to and fro in the directions indicated by the arrow 51. By placing spring means 52, 52' in compression between an end wall 53 of the gear box 14 and the bushings 48, 48', respectively, the worm gear 21 may be maintained in contact with the driven gear 22 with a uniform contact pressure, regardless of any manufacturing irregularities in either gear. It is to be noted that this embodiment does not require the gear box 14 to have a movable portion, nor are the external springs and stop, as shown in Figs. 2 and 3, included.

Referring next to Fig. 8, an alternate actuator embodiment is shown generally at 60. The actuator 60 may be utilized to replace the gear mechanism of Figs. 2 and 3 or of Fig. 7. In this embodiment, the driven gear 22 of Fig. 3 is replaced by a driven wheel 61 having a plurality of female teeth 62 uniformly distributed about its periphery. An endless belt 63, having a differing plurality of male teeth 64 formed on one side thereof, passes around the driven wheel 61 in a manner wherein the male teeth 64 of the belt 63 engage the female teeth 62 of the driven wheel 61. The endless belt 63 has an extent of a single circuit around said belt 63 sufficient to enclose the driven wheel 61 and to also provide a slack loop which passes around a drive wheel 65, in engagement with female teeth 66 formed around the periphery of the drive wheel 65. Two idler rollers 67, 67' are respectively mounted to a frame member (not illustrated) in a manner providing a substantially fixed spacial relationship between the idler rollers 67, 67', the drive wheel 65, and the driven wheel 61, corresponding to the relationship between the drive wheel, idler rollers, and rack of the preferred embodiment of the linear actuator described earlier.  As before, one of the idler rollers 67' is mounted on a spring actuated pivotal support to remove slack from the endless belt 63.  The idler rollers 67, 67' are adapted to maintain the endless belt 63 in firm contact with the driven wheel 61 except in the immediate vicinity of the drive wheel 65.  A motor, coupled to the shaft 68 of the drive wheel 65, provides rotation to the drive wheel 65 which, in turn, pulls the endless belt 63 causing the driven wheel 61 to rotate in the same direction.  In the present invention, a shaft 69 of the driven wheel 61 may be coupled to the drive wheel (28 of Fig. 2) of the linear actuator 10, thereby enabling this alternate embodiment to replace the worm gear 21 and driven gear 22 illustrated in Fig. 3.

It can be readily observed that the rotary-to-rotary actuator 60, described with reference to Fig. 8, may be utilized in other systems.  For example, if the shaft of the driven wheel 61 is fixed to a frame in a manner not allowing the driven wheel 61 to rotate, a carriage (not illustrated), to which the drive wheel 65 and the idler rollers 67, 67' are mounted, can be driven in a planetary motion around the periphery of the driven wheel 61, thus accomplishing a further motion useful in robotics.

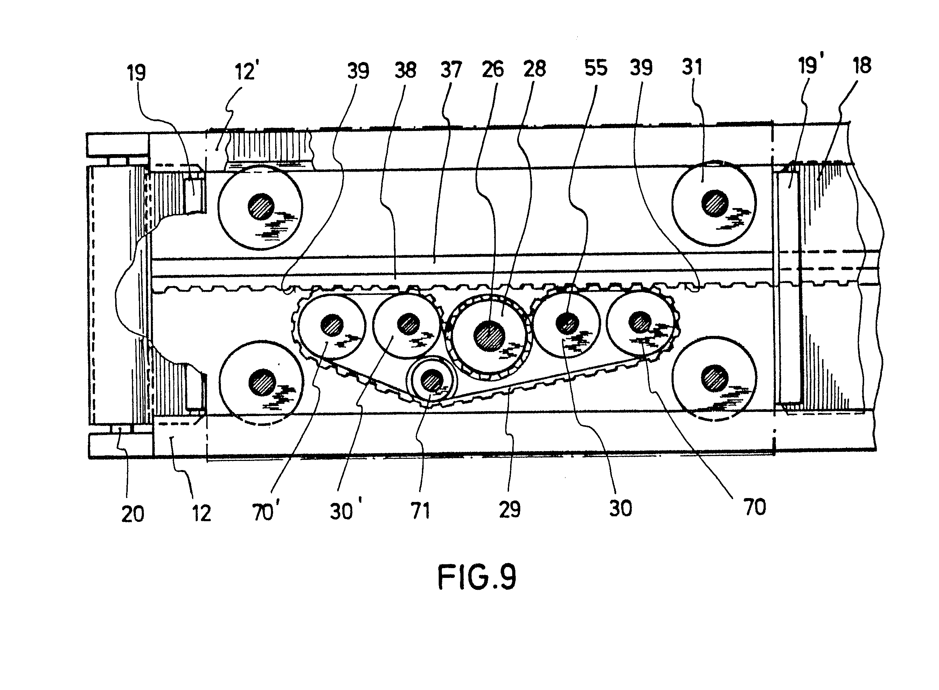

An alternate embodiment of the linear actuator having a closed loop timing belt 29 is shown at Figure 9.  The embodiment of Figure 9 essentially corresponds to the linear actuator assembly as shown at Figure 4, as far as the frame structure and carriage structure is concerned. Identical reference numerals with respect to the reference numerals used for describing the embodiments of foregoing Figures designate identical or similar parts, so that a detailed description thereof can be omitted.  Contrary to the embodiment shown at Figure 4, the linear actuator assembly in accordance with Figure 9 comprises a timing belt (29) which has the form of a closed loop. Two pairs of idler rollers (30,30'), (70,70') define two straight portions of the belt, which are in contact with respective portions of the rack (38). The drive wheel (28) affixed to the drive shaft (26) is disposed between the respective pairs of idler rollers (30,70); (30',70'). The belt (29) forms a loop passing around the outer periphery of the drive wheel (28). The remainder of the closed loop belt (29) is guided by an additional idler roller (71) which prevents the portion of the belt (29) between the outermost idler rollers (70,70') from coming into contact with the substantially U-shaped portion of the belt surrounding the periphery of said drive wheel (28).

Similar to the Figure 4 embodiment, one of the inner idler rollers (30,30') may comprise means for providing tension to the belt. Alternatively, the additional idler roller (71) can be located such that the flexible belt (29) is slightly elongated for bringing respective opposite edges of the male teeth of the straight portions of the belt (29) into close contact with respective edges of the female teeth of the rack for preventing any slack of the belt with respect to the rack. Hence, any backlash of the belt with respect to the rack is prevented by the opposite direction of the engaging forces of the respective male teeth of the separate straight portions of the flexible belt.

Hence, the linear actuator assembly in accordance with the present invention is free from any backlash in the positioning of the carriage with respect to the frame.

I CLAIM:

1.  A linear actuator comprising:

an elongated inflexible frame;

an inflexible support coextensive with said frame and vertically depending upwardly from the upper surface of said frame;

a rack, including a plurality of equally spaced female teeth, formed along the extent of a vertical surface of said support;

a length of flexible belt having male teeth imprinted on one side thereof so disposed as to matchingly interengage with the female teeth of said rack, said belt being affixed at each end thereof to the ends of said rack, said belt having an extent greater than the extent of said rack, said belt further having an intermediate portion looped into a substantially U-shaped configuration;

a drive wheel, having a plurality of female teeth interengageably matching the male teeth of said belt, depending from and affixed to a drive shaft carried by a carriage translatably carried along the extent of said frame, said drive wheel being situated within said intermediate U-shaped portion of said belt;

a pair of idler rollers rotatably affixed to shafts depending from said carriage and disposed external to said flexible belt in close proximity to said drive wheel and said rack, at least one of said idler rollers including means for providing tension to said flexible belt to hold said belt in contact with said rack and said drive wheel; and

means for driving said shaft of said drive wheel, thereby causing said carriage to traverse linearly with respect to said belt and said rack.

2.  A linear actuator as claimed in claim 1,
further comprising:

a recirculating dust shield comprising:

a substantially planer, flexible dust cover,
having a width adapted to fit within said inflexible
frame and a length approximately twice the length of
said inflexible frame less a length substantially
equivalent to the length of said carriage, said dust
cover being attached at both ends thereof to the ends
of said carriage;

a channel formed within said frame adapted to
permit the planar passage of said dust cover; and

a pair of roller pulleys, disposed
respectively at each end of said frame and around which
said dust cover passes, whereby at least said rack,
said flexible belt, said drive wheel, and said pair of
idler rollers are within a volume bounded by said
carriage, said flexible dust cover, and said frame.

3.  The linear actuator as claimed in claim 2,
wherein said recirculating dust shield is so adapted as
to provide for lubrication-free operation of said
linear actuator.

4.    The linear actuator as claimed in claim 1, wherein said means for driving said shaft of said drive wheel comprises:

a gear box depending upwardly from, and affixed to, the upper surface of said carriage, said shaft of said drive wheel extending upwardly, through bearing elements, into said gear box;

a driven gear, disposed within said gear box, affixed to and rotating with said shaft of said drive wheel;

a worm gear, affixed to and rotating with a shaft supported by and protruding externally from said gear box, said worm gear and said driven gear being in operable meshing engagement;

, a motor, mounted on said gear box, having its shaft coupled to said shaft of said worm gear by a coupling element; and,

means for maintaining said worm gear in meshing engagement with said driven gear with a substantially constant contact pressure.

5. The linear actuator as claimed in claim 1, wherein said means for driving said shaft of said drive wheel comprises:

a second drive wheel, having a plurality of female teeth disposed about its periphery, and rotating about a second drive shaft coupled to the shaft of a motor, said second drive wheel being disposed in a housing affixed upwardly on said carriage;

a driven wheel, having a plurality of equally spaced female teeth formed along the periphery of said driven wheel, said driven wheel being disposed within said housing, and affixed to, and rotating with, a shaft depending from said housing through bearing elements to form the drive shaft of said first drive wheel;

an endless flexible belt having male teeth imprinted on one side thereof so disposed as to matchingly interengage with the female teeth of said driven wheel and the female teeth of said second drive wheel; and

a second pair of idler rollers rotatably affixed to shafts depending from said housing and disposed external to said endless flexible belt in close proximity to said second drive wheel and to said driven wheel to maintain said belt in contact with said driven wheel and said second drive wheel, at least one of said second pair of idler rollers including means for providing tension to said endless flexible belt.

6. The linear actuator as claimed in claim 1, wherein said elongated inflexible frame has a length of at least of 20 feet.

7.    The linear actuator as claimed in claim 1, wherein said intermediate portion of said flexible belt maintains a substantially uniform length as said carriage traverses linearly from one end of said elongated inflexible frame to the other, such that said means for driving said shaft of said drive wheel experiences a uniform stiffness throughout said traverse.

8.    The linear actuator claimed in claim 1, wherein said flexible belt is extensible to a degree sufficient to absorb shock induced by rapid acceleration and deceleration of said carriage.

9. An actuator mechanism for a robot mechanism producing a generally rotary motion, comprising:

a frame, affixed to said robot mechanism;

a carriage, translatably carried by said frame, said translation being generally rotational;

a drive wheel, having a first plurality of female teeth disposed about its periphery, affixed to a shaft rotatably carried by said carriage;

a driven wheel, having a second plurality of female teeth disposed abouts its periphery, rigidly affixed to a non-rotatable shaft depending from said frame, each of the female teeth of said second plurality of female teel being substantially identical in shape with each other and with each of the female teeth of said first plurality of female teeth;

an endless flexible belt, having a third plurality of male teeth imprinted on one side thereof, and having a exnte sufficient to surround said driven wheel and to provide a substantially U-shaped slack portion enclosing said drive wheel, said third plurality male teeth being so disposed as to matchingly interengage with the female teeth of said driven wheel and with the female teeth of said drive wheel;

a pair of idler rollers rotatably affixed to a pair of shafts, respectively, said shafts being affixed to said carriage such that said idler rollers are disposed in close proximity to and on each side of said drive wheel, respectively, external to said endless belt, so as to maintain said belt in firm contact with said driven wheel and with said drive wheel, at least one of said idler rollers including means for providing tension to said endless flexible belt; and

means for controllably rotating said shaft of said drive wheel.

10. Linear actuator (10) comprising:

a frame (11);

a carriage (13) translatably guided with respect to the frame (11);

a rack (38) secured to the frame (11) extending in the direction of the translation of said carriage relative to the frame (11), said rack (38) having female teeth;

a drive wheel (28) affixed to a drive shaft (28) rotatably mounted to the carriage (13), said drive wheel having female teeth;

a flexible belt (29) having male teeth matchingly interengaging with the female teeth of the rack (38) and with the female teeth of the drive wheel (28), and

a pair of idler rollers (30,30') holding the belt (29) in contact with the rack (38),

characterised by

a roller (28) disposed between the idler rollers (30,30') whereat the belt (29) forms a loop passing around a part of the periphery of the roller (28), said loop separating two regions of said belt (29) interengaging with said rack (38).

11. Linear actuator as claimed in claim 10, characterised in

that the roller disposed between the idler rollers (30,30') is the drive wheel (28).

12. Linear actuator as claimed in claims 10 or 11, characterised in

that at least one of said idler rollers (30,30') includes means (42-44) for providing tension to said belt (29).

13. Linear actuator as claimed in one of the claims 10 to 12, characterised in

that the belt (29) forms a closed loop and that two further idler rollers (70,70') are located close to the rack (38) for holding respective straight portions of the belt (29) in contact with said rack (38), said portions of the belt (29) being separated by said loop formed by the periphery of the roller (28).

14. Linear actuator as claimed in one of the claims 10 to 12, characterised in

that said belt (29) is affixed at each end thereof to the ends of the rack (38), and

that said belt (29) has an extent greater than the extent of said rack (38).

FIG.1

FIG.5

FIG.6

1/4

0160923

FIG.4

FIG.3

FIG.2

2/4

0160923

FIG.7

FIG.8

FIG.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 048 572 (SIEMENS)  \* Page 5, lines 11-33; figure 2 \* | 1,9-12 ,14 | F 16 H   19/00 |
| Y | FR-A-2 219 342 (L.J. LOESCH)  \* Whole document \* | 1,9-12 ,14 | |
| A | FR-A- 883 528 (PEGARD)  \* Whole document \* | 2,3 | |
| P,A | DE-U-8 426 813 (HAMÜL) | | |
| A | DE-A-2 910 373 (HAMÜL) | | |
| A | DE-A-3 016 313 (VEB LANDMASCHINEN) | | |

TECHNICAL FIELDS SEARCHED (Int. Cl.4)

F 16 H   19/00
B 25 J    9/00
B 23 Q    5/00
B 23 Q   11/00

The present search report has been drawn up for all claims

| Place of search BERLIN | Date of completion of the search 10-07-1985 | Examiner GERTIG I. |
|---|---|---|